# EUROPÄISCHE PATENTSCHRIFT

(11) **EP 2 942 553 B1**
(45) Veröffentlichungstag und Bekanntmachung des Hinweises auf die Patenterteilung: **04.04.2018**
(21) Anmeldenummer: 15163721.2
(22) Anmeldetag: 15.04.2015
(51) Int. Cl.: F16K 11/087, B01D 35/12, F16K 27/06

(54) **UMSCHALTVENTIL**
SWITCHOVER VALVE
SOUPAPE D'INVERSION

(30) Priorität: 05.05.2014 DE 102014208358
(43) Veröffentlichungstag der Anmeldung: 11.11.2015
(73) Patentinhaber: Filtration Group GmbH, 74613 Öhringen (DE)
(72) Erfinder: Haj Hassine, Atef, 74613 Öhringen (DE)
(74) Vertreter: BRP Renaud & Partner mbB Rechtsanwälte Patentanwälte Steuerberater

(56) Entgegenhaltungen:
- DE-A1- 3 123 292
- DE-A1- 3 739 614
- DE-U1- 20 213 378
- US-A- 3 450 157
- US-A- 5 443 722

## Beschreibung

Die vorliegende Erfindung betrifft ein Umschaltventil zum Umschalten zwischen zwei Filtern. Die Erfindung betrifft außerdem eine Filtereinrichtung mit zwei Filtern und einem derartigen Umschaltventil.

Umschaltventile in Filtereinrichtungen werden beispielsweise dazu benutzt, bei einer Filtereinrichtung mit zwei Filtern bedarfsgerecht das eine oder andere Filter zu- bzw. abschalten zu können. Insbesondere kann dadurch auch ein Dauerbetrieb realisiert werden, da das nicht durchströmte Filter ausgetauscht und somit die gesamte Filtereinrichtung gewartet werden kann. Um dabei zwischen den beiden Filtern umschalten zu können, ist ein Umschaltventil erforderlich, welches im Extremfall den Durchfluss durch lediglich eines der beiden Filter erlaubt, wogegen das andere Filter gesperrt ist. Selbstverständlich ist bei einer Zwischenstellung des erfindungsgemäßen Umschaltventils auch ein anteilsmäßiges Durchströmen der beiden Filter denkbar.

Aus der DE 34 09 697 A1 ist ein Filter mit einem Gehäuse mit einem Zufluss und einem Abfluss für ein zu filterndes Medium bekannt. Ein Filtereinsatz unterteilt dabei den Innenraum des Gehäuses in zwei Teilräume, dessen erster mit dem Zufluss und dessen zweiter mit dem Abfluss in Verbindung steht. Darüber hinaus ist ein verschieblich gelagerter Ventilkörper vorgesehen, der einerseits von dem Medium im ersten Teilraum und andererseits von dem Medium im zweiten Teilraum beaufschlagbar ist und beim Überschreiten eines Differenzdrucks der Medien in den beiden Teilräumen gegen die Wirkung eines elastischen Kraftspeichers aus einer Ausgangsstellung heraus verschiebbar ist. Um einen zu hohen Differenzdruck zwischen dem ersten und dem zweiten Teilraum zu verhindern, ist dem Ventilkörper ein Ventilsitz zugeordnet, der sich im Strömungsweg vom zweiten Teilraum zum Abfluss befindet, wobei der Ventilkörper in der Ausgangsstellung von dem Ventilsitz abgehoben ist, während er bei Steigerung des Differenzdrucks der Medien in den beiden Teilräumen gegen diesen verschoben wird.

Aus der DE 82 31 792 U1 ist ein Filterkopf zur Aufnahme mehrerer abwechselnd abschaltbarer Filterkammern mit jeweils einer einzigen Zu- und Abströmöffnung und einem Drehschieber zum abwechselnden Abschalten mindestens einer Filterkammern bekannt. Der Drehschieber steht dabei ausschließlich und gleichzeitig mit dem ungefilterten Medium aller Filterkammern in Berührung und verschließt abwechselnd nur den Zugang zu einer Filterkammer. Jede der beiden Filterkammern ist dabei abströmseitig mit einem stromauf sperrenden Rückschlagventil versehen. Hierdurch soll die Handhabung vereinfacht werden.

Aus der DE 37 39 614 A1 ist ein Umschaltventil zum Umschalten zwischen zwei Filtern mit einer Schaltwalze bekannt, die ein Einlassventil und ein damit über einen Verbindungsabschnitt drehfest verbundenes Auslassventil aufweist, so dass durch ein Verdrehen der Schaltwalze ein Umschalten zwischen den beiden Filtern erfolgt. In dem Verbindungsabschnitt, das heißt in vorliegendem Fall in der Schaltwalze selbst, ist dabei ein Bypassventil angeordnet, das in geöffnetem Zustand das Einlassventil mit dem Auslassventil verbindet.

Die vorliegende Erfindung beschäftigt sich mit dem Problem, ein Umschaltventil zum Umschalten zwischen zwei Filtern einer Filtereinrichtung anzugeben, welches eine erhöhte Funktionalität und gleichzeitig eine kompakte Bauweise aufweist.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, bei einem Umschaltventil zum Umschalten zwischen zwei Filtern einer Filtereinrichtung eine Schaltwalze vorzusehen, die ein Einlassventil und ein damit über einen Verbindungsabschnitt drehfest verbundenes Auslassventil aufweist, so dass durch ein Verdrehen der Schaltwalze ein Umschalten zwischen den beiden Filtern erfolgt. Um dabei das Umschaltventil vergleichsweise kompakt bauen zu können, ist erfindungsgemäß in dem Verbindungsabschnitt ein Bypassventil angeordnet, das in geöffnetem Zustand das Einlassventil mit dem Auslassventil verbindet und dadurch einen Bypass zu dem jeweils durchströmten Filter schafft. Das Bypassventil ermöglicht dabei einen Kurzschluss eines jeweils durchströmten Filters bei einem zu hohen Differenzdruck zwischen dem Einlassventil, das heißt der Rohseite, und dem Auslassventil, das heißt der Reinseite. Ein zu hoher Differenzdruck kann beispielsweise dadurch entstehen, dass das jeweilige durchströmte Filter verstopft ist. In diesem Fall öffnet somit das Bypassventil und ermöglicht eine Bypassströmung zwischen Reinseite über das Bypassventil zu der Schmutzseite. Neben einer äußerst kompakten und damit bauraumoptimierenden Bauweise des erfindungsgemäßen Umschaltventils kann mit diesem auch eine Reduzierung der bisher erforderlichen Bauteile erreicht werden, da insbesondere separate Bypassleitungen und separat angeordnete Bypassventile entfallen können. Erfindungsgemäß weist die Schaltwalze ein Oberteil, ein Unterteil und den dazwischen angeordneten Verbindungsabschnitt aufweist, wobei der Verbindungsabschnitt als Schaltkörper mit zumindest zwei, vorzugsweise sogar sechs, Bypassventilen ausgebildet ist. Durch die Integration des Bypassventils in den Verbindungsabschnitt des Umschaltventils kann dieses als zusammenhängende und insbesondere vorfertigbare Baugruppe ausgebildet werden, wodurch sich zudem Kostenvorteile ergeben. Das Vorsehen von mehreren Bypassventilen steigert die Funktionssicherheit, da selbst bei einem Versagen eines einzelnen Bypassventils die Bypassfunktion von den übrigen Bypassventilen übernommen werden kann. Bei dem Vorsehen von beispielsweise sechs Bypassventilen können diese vergleichsweise klein ausgebildet werden und dadurch günstig im Schaltkörper angeordnet werden.

Bei einer nicht zur Erfindung gehörenden Ausführungsform sind das Einlassventil und das Auslassventil als Kugelventil mit jeweils einem kugelförmigen Ventilkörper ausgebildet. Diese sind über den Verbindungsabschnitt drehfest miteinander verbunden, wobei der Verbindungsabschnitt beispielsweise formschlüssig in das Einlassventil und das Auslassventil eingreifen und damit die Drehmomentübertragung sicherstellen kann. Eine derartige Formschlussverbindung zur Drehmomentübertragung erleichtert auch die Montage und Demontage des erfindungsgemäßen Umschaltventils, da beispielsweise zum Trennen des Einlassventils, des Verbindungsabschnitts und des Auslassventils kein Lösen zusätzlicher Verbindungselemente erforderlich ist, sondern diese einfach aus- bzw. ineinander gesteckt werden können. Der Verbindungsabschnitt kann dabei also Rohrstück ausgebildet sein und ermöglicht dadurch eine vergleichsweise hohe Drehmomentübertragungsfähigkeit.

Um bei einem zu hohen Differenzdruck das Bypassventil öffnen zu können, muss dieses kommunizierend mit der Rohseite und der Reinseite, das heißt mit dem Einlassventil und dem Auslassventil verbunden sein. Dies kann beispielsweise darüber erfolgen, dass der Ventilkörper des Einlassventils und des Auslassventils eine mit dem Bypassventil kommunizierende Bypassöffnung besitzt. Zusätzlich oder alternativ ist es auch denkbar, dass der Ventilkörper des Einlassventils bzw. des Auslassventils drehbar in einem Gehäuse des Umschaltventils angeordnet ist, wobei zwischen dem Ventilkörper und dem Gehäuse ein Leckagestrom zum Bypassventil strömen kann, so dass auf die im vorherigen Satz erwähnte Bypassöffnung im Ventilkörper rein theoretisch verzichtet werden kann. Durch die erfindungsgemäße Integration des Einlassventils, des Bypassventils im Verbindungsabschnitt und des Auslassventils in das Umschaltventil sind keine zusätzlichen Leitungen, insbesondere Bypassleitung, erforderlich, wodurch sich nicht nur die Teilevielfalt reduziert, sondern auch die Kosten des Umschaltventils reduzieren lassen.

Zweckmäßig ist am Oberteil und am Unterteil jeweils eine um den Umfang verlaufende O-Ringdichtung zur Abdichtung gegenüber einem Gehäuse des Umschaltventils angeordnet, wobei zwischen den beiden O-Ringdichtungen eine senkrecht dazu angeordnete O-Ringdichtung über den Verbindungsabschnitt verläuft. Die beiden am Oberteil und am Unterteil angeordneten O-Ringdichtungen können dabei ebenso wie die orthogonal dazu angeordnete Ringdichtung in entsprechenden Nuten an der Schaltwalze eingelassen werden und dienen dabei der Abdichtung zwischen Rein- und Rohseite bzw. gegenüber dem Gehäuse. Die den Verbindungsabschnitt in Axialrichtung überspannende O-Ringdichtung kann dabei vorab eingelegt werden, sofern das Oberteil und das Unterteil noch nicht mit dem Verbindungsabschnitt verbunden, insbesondere verschraubt sind. Durch das Verschrauben des Oberteils und des Unterteils mit dem Verbindungsabschnitt wird die den Verbindungsabschnitt überbrückende O-Ringdichtung in der Schaltwalze fixiert. Derartige O-Ringdichtungen sind kostengünstig und langlebig, wodurch eine lange Lebensdauer des erfindungsgemäßen Umschaltventils gewährleistet werden kann.

Die Erfindung beruht weiter auf dem allgemeinen Gedanken, eine Filtereinrichtung mit zwei Filtern mit einem derartigen Umschaltventil auszustatten, wobei dieses dem Umschalten zwischen den beiden Filtern dient. Durch das in das erfindungsgemäße Umschaltventil integrierte Bypassventil kann zudem die erforderliche Bypassfunktion bauraumoptimiert, optimiert im Hinblick auf die Teilevielfalt und kostenoptimiert bereitgestellt werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Standardrahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1a, b: eine Schnittdarstellung einer Filtereinrichtung mit einem nicht zur Erfindung gehörenden Umschaltventil,
- Fig. 2: eine teilweise Schnittdarstellung durch ein erfindungsgemäßes Umschaltventil bei einer anderen Ausführungsform,
- Fig. 3: eine Schaltwalze des in der Fig. 2 gezeigten Umschaltventils.

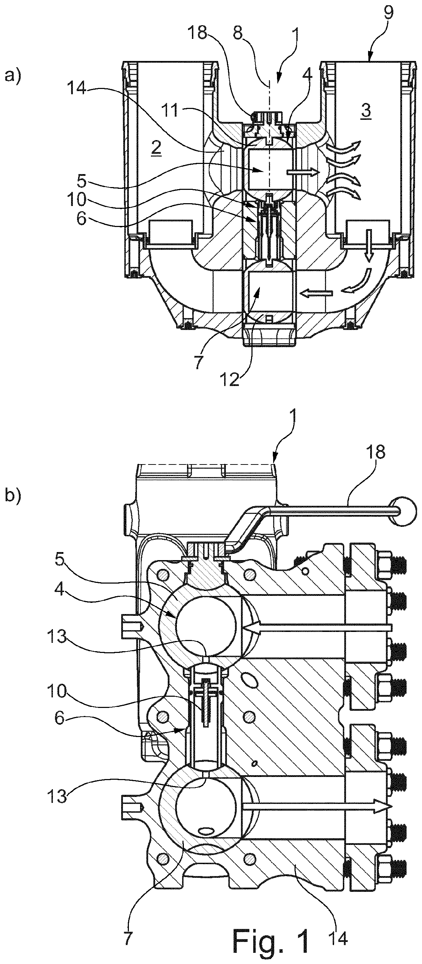

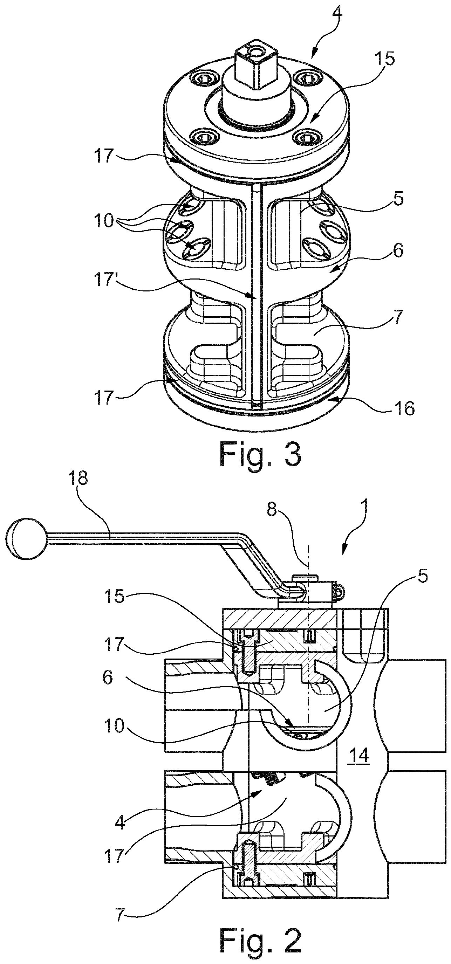

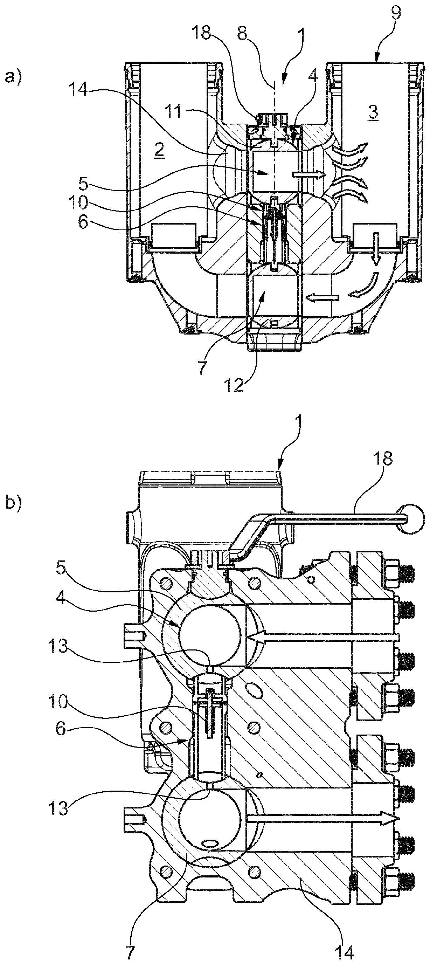

Entsprechend den Fig. 1 und 2, weist ein Umschaltventil 1 zum Umschalten zwischen zwei Filtern 2, 3 (vgl. Fig. 1a) eine Schaltwalze 4 auf, die ein Einlassventil 5 und ein damit über einen Verbindungsabschnitt drehfest verbundenes Auslassventil 7 besitzt. Durch ein Verdrehen der Schaltwalze 4 um deren Achse 8 erfolgt ein Umschalten zwischen den beiden Filtern 2 und 3. Die beiden Filter 2 und 3 sowie das Umschaltventil 1 können dabei Bestandteil einer Filtereinrichtung 9, insbesondere eines Industriefilters, sein. Erfindungsgemäß ist nun zudem in dem Verbindungsabschnitt 6 ein Bypassventil 10 angeordnet, das in geöffnetem Zustand das Einlassventil 5 mit dem Auslassventil 7 verbindet und damit einen Kurzschluss des durchströmenden Mediums ermöglicht. Das Bypassventil 10 öffnet dabei ab einem vordefinierten Grenzdruck, das heißt insbesondere ab einem vordefinierten Differenzdruck zwischen der Rohseite (im Bereich des Einlassventils 5) und der Reinseite (im Bereich des Auslassventils 7). Durch das Öffnen des Bypassventils 10 soll auch bei verstopftem Filter 2, 3 oder bei einem Kaltstart der Hydraulikanlage ein weiteres Durchströmen der Filtereinrichtung 9 mit Fluid ermöglicht werden.

Betrachtet man dabei die Fig. 1a und 1b, so kann man erkennen, dass das Einlassventil 5 und das Auslassventil 7 als Kugelventil mit jeweils einem kugelförmigen Ventilkörper 11, 12 ausgebildet sind. Der Verbindungsabschnitt 6 hingegen ist als Rohrstück ausgebildet, in welchem das Bypassventil 10 platzsparend und damit bauraumoptimierend angeordnet ist. Eine drehfeste Verbindung zwischen dem Einlassventil 5 und dem Auslassventil 7 erfolgt dabei über eine Formschlussverbindung zu dem Ventilkörper 11 des Einlassventils 5 und dem Verbindungsabschnitt 6 sowie zwischen diesem und dem Ventilkörper 12 des Auslassventils 7. Eine derartige formschlüssige Verbindung erleichtert zudem auch eine Montage bzw. Demontage des erfindungsgemäßen Umschaltventils 1.

Um bei einem verstopften Filter 2, 3 ein Durchströmen des Bypassventils 10 zu ermöglichen, kann der Ventilkörper 11, 12 jeweils eine mit dem Bypassventil 10 kommunizierende Bypassöffnung 13 aufweisen, die gemäß der Fig. 1b lediglich rein schematisch dargestellt ist. Alternativ hierzu ist es auch denkbar, dass der Ventilkörper 11, 12 drehbar in einem Gehäuse 14 des Umschaltventils 1 angeordnet ist, wobei zwischen dem Ventilkörper 11, 12 und dem Gehäuse 14 ein Leckagestrom zum Bypassventil 10 strömen kann. In diesem Fall muss die Bypassöffnung 13 im jeweiligen Ventilkörper 11, 12 nicht unbedingt vorgesehen sein.

Bei der gemäß der Fig. 2 gezeigten Ausführungsform des erfindungsgemäßen Umschaltventils 1 weist diese eine spezielle Schaltwalze 4 auf, die in Fig. 3 in einer Seitenansicht dargestellt ist. In diesem Fall besitzt die Schaltwalze 4 keine kugelförmigen Ventilkörper 11, 12, sondern ein Oberteil 15, ein Unterteil 16 und den dazwischen angeordneten Verbindungsabschnitt 6. Der Verbindungsabschnitt 6 ist dabei als Schaltkörper ausgebildet und besitzt mehrere Bypassventile 10, zumindest zwei, vorzugsweise 6. Am Oberteil 15 und am Unterteil 16 ist dabei jeweils eine um den Umfang verlaufende O-Ringdichtung 17 zur Abdichtung gegenüber dem Gehäuse 14 angeordnet. Die beiden O-Ringdichtungen 17 sind dabei in einer Nut des Oberteils 15 bzw. des Unterteils 16 gehalten. Zwischen den beiden beschriebenen O-Ringdichtungen 17 verläuft eine weitere, senkrecht dazu angeordnete O-Ringdichtung 17' über den Verbindungsabschnitt 6 hinweg. Diese wird zunächst montiert und zwar bevor das Oberteil 15 und das Unterteil 16 mit dem Verbindungsabschnitt 6 verschraubt werden. Die O-Ringdichtung 17' dient dabei zur Abdichtung und zur Vermeidung von internen Leckagen, wogegen die beiden anderen O-Ringdichtungen 17 eine Abdichtung nach außen bewirken.

Wie in den Fig. 1 bis 3 dargestellt, wird das Umschaltventil 1 durch ein händisches Verdrehen der Schaltwalze 4 umgeschaltet, wozu ein Hebel 18 drehfest mit der Schaltwalze 4, beispielsweise durch eine formschlüssige Verbindung, verbunden ist. Selbstverständlich ist dabei auch jede andere Ausführungsform eines Verstellens, beispielsweise eine motorische Antriebseinrichtung, denkbar.

Durch das erfindungsgemäße Umschaltventil 1 ist es erstmals möglich, ein erforderliches Bypassventil 10 bauraumoptimierend kostengünstig im Bereich der Schaltwalze 4 anzuordnen, wodurch zusätzlich die Teilevielfalt, beispielsweise durch Entfall separater Bypasslösungen, reduziert werden kann. Ein derartiges Umschaltventil 1 kann in allen gängigen Filtereinrichtungen 9 im industriellen Bereich sowie in Fahrzeugen verwendet werden.

## Patentansprüche

1. Umschaltventil (1) zum Umschalten zwischen zwei Filtern (2,3), mit einer Schaltwalze (4), die ein Einlassventil (5) und ein damit über einen Verbindungsabschnitt (6) drehfest verbundenes Auslassventil (7) aufweist, so dass durch ein Verdrehen der Schaltwalze (4) ein Umschalten zwischen den beiden Filtern (2,3) erfolgt, wobei in dem Verbindungsabschnitt (6) zumindest ein Bypassventil (10) angeordnet ist, das in geöffnetem Zustand das Einlassventil (5) mit dem Auslassventil (7) verbindet,
**dadurch gekennzeichnet, dass**
die Schaltwalze (4) ein Oberteil (15), ein Unterteil (16) und den dazwischen angeordneten Verbindungsabschnitt (6) aufweist, wobei der Verbindungsabschnitt (6) als Schaltkörper mit zumindest zwei, vorzugsweise sogar sechs, Bypassventilen (10) ausgebildet ist.

2. Umschaltventil nach Anspruch 1,
**dadurch gekennzeichnet, dass**
am Oberteil (15) und am Unterteil (16) jeweils eine um den Umfang verlaufende O-Ringdichtung (17) zur Abdichtung gegenüber dem Gehäuse (14) angeordnet ist, wobei zwischen den beiden O-Ringdichtungen (17) eine senkrecht dazu angeordnete O-Ringdichtung (17') über den Verbindungsabschnitt (6) verläuft.

3. Umschaltventil nach einem der vorhergehenden Ansprüche,
**dadurch gekennzeichnet, dass**
das Bypassventil (10) ab einem vordefinierten Druck öffnet.

4. Filtereinrichtung (9) mit zwei Filtern (2,3) und einem Umschaltventil (1) nach einem der vorhergehenden Ansprüche zum Umschalten zwischen den beiden Filtern (2,3).

## Claims

1. Switch valve (1) for switching between two filters (2, 3), with a switch cylinder (4), which has an inlet valve (5) and an outlet valve (7) connected in a torque-proof manner thereto via a connection section (6) such that switching takes place between the two filters (2, 3) by rotating the switch cylinder (4), wherein at least one bypass valve (10) is arranged in the connection section (6), which connects the inlet valve (5) to the outlet valve (7) in the opened state,
**characterised in that**
the switch cylinder (4) has an upper part (15), a lower part (16) and the connection section (6) arranged therebetween, wherein the connection section (6) is formed as a switch body with at least two, preferably even six bypass valves (10).

2. Switch valve according to claim 1,
**characterised in that**
one O-ring seal (17) running around the circumference in order to seal against the housing (14) is respectively arranged on the upper part (15) and on the lower part (16), wherein an O-ring seal (17') arranged perpendicular thereto runs via the connection section (6) between the two O-ring seals (17).

3. Switch valve according to any one of the preceding claims,
**characterised in that**
the bypass valve (10) opens from a predefined pressure.

4. Filter device (9) with two filters (2, 3) and a switch valve (1) according to any one of the preceding claims for switching between the two filters (2, 3).

## Revendications

1. Soupape d'inversion (1) pour basculer entre deux filtres (2, 3), avec un tambour de commutation (4), qui présente une soupape d'entrée (5) et une soupape de sortie (7) reliée à celle-ci, solidaire en rotation, via une section de liaison (6) de sorte que se produise, par rotation du tambour de commutation (4), un basculement entre les deux filtres (2, 3), dans laquelle est agencée dans la section de liaison (6) au moins une soupape de dérivation (10) qui relie la soupape d'entrée (5) à la soupape de sortie (7) à l'état ouvert,
**caractérisée en ce que** :
le tambour de commutation (4) présente une partie supérieure (15), une partie inférieure (16) et une section de liaison (6) agencée entre elles, dans laquelle la section de liaison (6) se présente sous la forme d'un corps de commutation avec au moins deux, de préférence même six soupapes de dérivation (10).

2. Soupape d'inversion selon la revendication 1,
**caractérisée en ce que** :
un joint torique (17) s'étendant sur la périphérie est agencé sur la partie supérieure (15) et la partie inférieure (16) respectivement pour assurer une étanchéité vis-à-vis du boîtier (14), dans laquelle s'étend entre les deux joints toriques (17) un joint torique (17') agencé perpendiculairement à ceux-ci via la section de liaison (6).

3. Soupape d'inversion selon l'une quelconque des revendications précédentes,
**caractérisée en ce que** :
la soupape de dérivation (10) s'ouvre à partir d'une pression prédéfinie.

4. Dispositif filtrant (9) avec deux filtres (2, 3) et une soupape d'inversion (1) selon l'une quelconque des revendications précédentes pour basculer entre les deux filtres (2, 3).
